# EUROPEAN PATENT APPLICATION

(11) **EP 4 322 100 A1**
(43) Date of publication of application: **14.02.2024**
(21) Application number: 22924788.7
(22) Date of filing: 03.02.2022
(51) Int. Cl.: G06Q 50/10

(54) **CONTENT PROVIDING DEVICE, CONTENT PROVIDING METHOD, CONTENT PROVIDING PROGRAM, AND CONTENT PROVIDING SYSTEM**

(71) Applicant: Super Massive Global Inc., Tokyo 107-0052 (JP)
(72) Inventor: NAITO Makoto, Tokyo 107-0052 (JP)
(74) Representative: Osterhoff, Utz
(86) International application number: PCT/JP2022/004232
(87) International publication number: WO 2023/148877

(57) **Abstract**

To further promote digital data trading.

The present invention provides a content providing apparatus that is configured as follows. A storage unit stores a virtual space generated based on geographical information of a real space, a structure object corresponding to a structure present in the real space, owner information on an owner proven as an owner of the structure object, and content information associated with the owner information. An object providing unit provides the virtual space; the structure object, and a user object such that the virtual space, the structure object, and the user object associated with position information on a user terminal in the real space are displayed on a display unit of the user terminal. When the position information on the user terminal indicates the user terminal's being present within a given range from the structure in the real space and a request for the content is made from the user terminal, a content providing unit provides the content in such a way as to allow the user terminal to use the content. An incentive giving unit gives an incentive to the owner.

## Description

### Technical Field

The present invention relates to a content providing apparatus, a content providing method, a content providing program, and a content providing system.

### Background Art

In recent years, a technique of trading and distributing digital data, such as image data, as a non-fungible token (NFT) has been proposed. The following documents disclose techniques related to the NFT, and the whole of these documents is cited as a reference material that makes up part of description of the present specification.

### Citation List

### Patent Literature

Patent Literature 1: Japanese Patent No. 6710401
Patent Literature 2: Japanese Patent No. 6656628
Patent Literature 3: Japanese Patent No. 6572493
Patent Literature 4: Japanese Patent No. 6640320
Patent Literature 5: Japanese Patent No. 6538996
Patent Literature 6: Japanese Patent No. 6404435
Patent Literature 7: Japanese Patent No. 6710401
Patent Literature 8: Japanese Patent No. 6391128

### Summary of Invention

### Technical Problem

The above technique related to the NFT is merely a technique for trading digital data, and is insufficient as a technique for promoting active trading.

An object of the present invention is to further promote digital data trading.

### Solution to Problem

The present invention offers
a content providing apparatus including:
a storage unit storing a virtual space generated based on geographical information of a real space, a structure object corresponding to a structure present in the real space, owner information on an owner proven as an owner of the structure object, and content information associated with the owner information;
an object providing unit that provides the virtual space, the structure object, and a user object such that the virtual space, the structure object, and the user object associated with position information on a user terminal in the real space are displayed on a display unit of the user terminal;
a content providing unit that when the position information on the user terminal indicates the user terminal's being present within a given range from the structure and a request for the content is made from the user terminal, provides the content in such a way as to allow the user terminal to use the content; and
an incentive giving unit that in accordance with the number of user terminals present within the given range from the structure as a result of the user's visiting the structure, gives a prescribed incentive to an owner of the structure object corresponding to the structure.

### Advantageous Effects of Invention

According to the present invention, digital data trading can be further promoted by using entertainment.

### Brief Description of Drawings

Fig. 1 depicts a configuration example of a content providing system according to an embodiment of the present invention.
Fig. 2 schematically depicts correspondence between a virtual space and a real space that are provided by a content providing apparatus of Fig. 1.
Fig. 3 depicts a positional relationship between a structure and a user present within a given range from the structure in the real space of Fig. 2.
Fig. 4 is an example of a screen displayed on a display unit of a user terminal of Fig. 1.
Fig. 5 depicts an example of a hardware configuration of the content providing apparatus of Fig. 1.
Fig. 6 depicts an example of a hardware configuration of the user terminal of Fig. 1.
Fig. 7 is a functional block diagram of each of terminals of Fig. 1.
Fig. 8 schematically depicts a data structure in a storage unit of the content providing apparatus of Fig. 1.
Fig. 9 schematically depicts a typical process carried out between terminals of Fig. 1.
Fig. 10 is a functional block diagram partially showing a modification of the content providing apparatus of Fig. 5.
Fig. 11 is a functional block diagram partially showing another modification of the content providing apparatus of Fig. 5.
Fig. 12 is a functional block diagram partially showing still another modification of the content providing apparatus of Fig. 5.
Fig. 13 is a functional block diagram partially showing still another modification of the content providing apparatus of Fig. 5.
Fig. 14 is a schematic diagram showing an example of a process of proving a change in an owner of a structure object provided by the content providing apparatus of Fig. 5.

### Description of Embodiments

The details of an embodiment of the present invention will be described by a list of items. The present invention has the following configurations.
[Item 1]
   A content providing apparatus including:
   a storage unit storing a virtual space generated based on geographical information of a real space, a structure object corresponding to a structure present in the real space, owner information on an owner proven as an owner of the structure object, and content information associated with the owner information;
   an object providing unit that provides the virtual space, the structure object, and a user object such that the virtual space, the structure object, and the user object associated with position information on a user terminal in the real space are displayed on a display unit of the user terminal;
   a content providing unit that when the position information on the user terminal indicates the user terminal's being present within a given range from the structure and a request for the content is made from the user terminal, provides the content in such a way as to allow the user terminal to use the content; and
   an incentive giving unit that in accordance with the number of user terminals present within the given range from the structure as a result of the users' visiting the structure, gives a prescribed incentive to an owner of the structure object corresponding to the structure.
[Item 2]
   The content providing apparatus according to claim 1,
   wherein rights for the structure object, the rights being related to the owner, are traded on a given trading platform, and
   wherein the content providing apparatus further includes a structure object price determining unit that determines a trading price of the structure object, based on a price request by an owner who wishes to trade the structure object.
[Item 3]
   The content providing apparatus according to claim 1,
   wherein rights for the structure object, the rights being related to the owner, are traded on a given trading platform, and
   wherein the content providing apparatus further includes a structure object price determining unit that determines a trading price of the structure object, based on at least the number of users having visited the structure.
[Item 4]
   The content providing apparatus according to claim 1,
   wherein rights for the structure object, the rights being related to the owner, include information on a second owner to which the owner has lent the rights, and
   wherein the content providing apparatus further includes a share giving unit that gives a share of an economic profit that the second owner has gained over the structure object, to the owner.
[Item 5]
   The content providing apparatus according to claim 1, further including
   a cryptocurrency providing unit that when the content providing apparatus receives the request for the content from the user terminal, provides a cryptocurrency according to the content in such a way as to allow the user terminal to use the cryptocurrency.
[Item 6]
   The content providing apparatus according to claim 5,
   wherein the cryptocurrency is a token that is issued using a given distributed ledger technology.
[Item 7]
   The content providing apparatus according to claim 1,
   wherein the owner of the structure object is authenticated by a non-fungible token, and
   wherein when the authenticated owner is changed, the storage unit updates information by associating the owner information and the content information with changed information on the owner.
[Item 8]
   The content providing apparatus according to claim 1,
   wherein the content is information of which the owner is authenticated by a non-fungible token.
[Item 9]
   A content providing method including the steps of:
   acquiring a virtual space generated based on geographical information of a real space, a structure object corresponding to a structure present in the real space, owner information on an owner proved as an owner of the structure object, and content information associated with the owner information, from a content providing apparatus;
   displaying the virtual space, the structure object, and a user object on a display unit of a user terminal, the virtual space, the structure object, and the user object being associated with position information on the user terminal in the real space;
   when the position information on the user terminal indicates the user terminal's being present within a given range from the structure and a request for the content is made from the user terminal, allowing the user terminal to use the content; and
   in accordance with the number of user terminals present within the given range from the structure as a result of the users' visiting the structure, giving a prescribed incentive to an owner of the structure object corresponding to the structure.
[Item 10]
   A content providing program that causes a computer to function as:
   a storage unit storing a virtual space generated based on geographical information of a real space, a structure object corresponding to a structure present in the real space, owner information on an owner proven as an owner of the structure object, and content information associated with the owner information;
   an object providing unit that provides the virtual space, the structure object, and a user object such that the virtual space, the structure object, and the user object associated with position information on a user terminal in the real space are displayed on a display unit of the user terminal;
   a content providing unit that when the position information on the user terminal indicates the user terminal's being present within a given range from the structure and a request for the content is made from the user terminal, provides the content in such a way as to allow the user terminal to use the content; and
   an incentive giving unit that in accordance with the number of user terminals present within the given range from the structure as a result of the user's visiting the structure, gives a prescribed incentive to an owner of the structure object corresponding to the structure.
[Item 11]
   A content providing system including a content providing apparatus and a user terminal,
   wherein the content providing apparatus includes:
   a storage unit storing a virtual space generated based on geographical information of a real space, a structure object corresponding to a structure present in the real space, owner information on an owner proven as an owner of the structure object, and content information associated with the owner information; and
   an object providing unit that provides the virtual space, the structure object, and a user object such that the virtual space, the structure object, and the user object associated with position information on a user terminal in the real space are displayed on a display unit of the user terminal,
   wherein when the user terminal present within a given range from the structure in the real space transmits position information and a request for the content, to the content providing apparatus, the content providing apparatus provides the content requested by the transmitted request in such a way as to allow the user terminal to use the content, and
   wherein in accordance with the number of user terminals present within the given range from the structure as a result of the user's visiting the structure, the content providing apparatus gives a prescribed incentive to an owner of the structure object corresponding to the structure.

### <Details of Embodiment>

An embodiment of the present invention will be described with reference to the drawings.

### <Configuration>

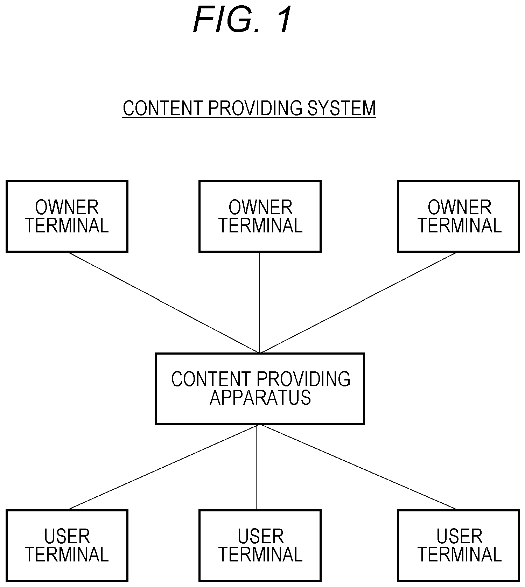

As shown in Fig. 1, a content providing system (which will hereinafter be referred to as "the present system") according to an embodiment of the present invention includes a content providing apparatus, user terminals, and owner terminals. The content providing apparatus, the user terminals, and the owner terminals are interconnected via a network to be capable of communicating with each other.

The content providing apparatus of the present system includes a recording medium from which a content providing program can be read. The content providing program is read by a processor (control unit) of the content providing apparatus, and implements the content providing system and a content providing method through physical and/or logical collaboration with hardware resources.

### <System Overview>

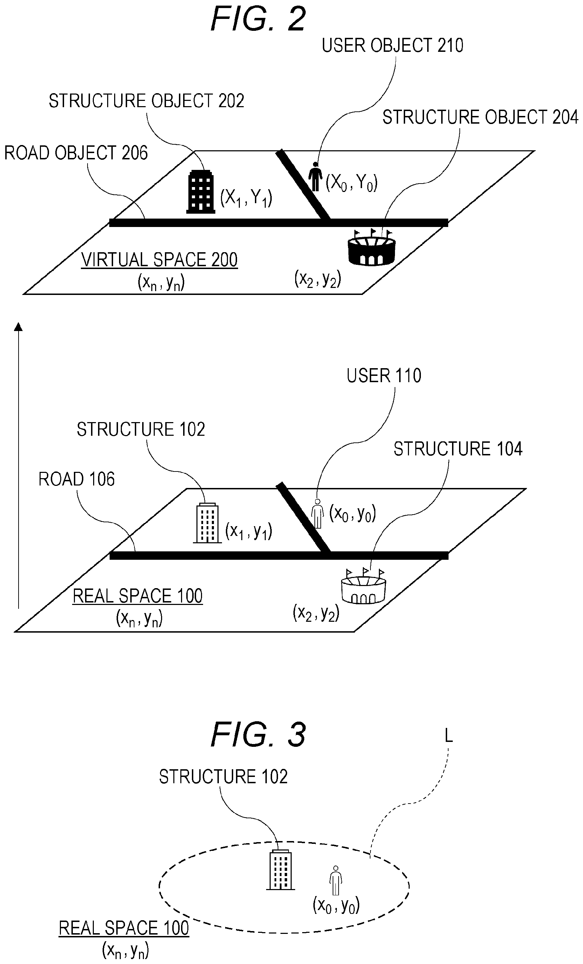

As shown in Figs. 2 to 4, in the present system, a user can experience the internal world of a virtual space generated based on geographical information of a real space, using a user terminal. Specifically, as clearly indicated in Fig. 2, a virtual space 200 is a direct reproduction of a real space 100. Position information (Xₙ, Yₙ) on the virtual space 200 is present as information uniquely corresponding to position information (xₙ, yₙ) on the real space 100.

The position information on the real space can be measured by a global positioning system (GPS) or the like, but may be identified by other methods.

For example, in the real space 100, a structure 102, i.e., a building is present at a position indicated by the position information (x₁, y₁), as shown in Fig. 2. A structure 104, i.e., a stadium is present at a position indicated by position information (x₂, y₂). User position information, which changes as a user 110 moves, is denoted as (x₀, y₀). Meanwhile, in the virtual space 200 generated by the content providing apparatus, the structure 102 in the real space is displayed as a structure object 202 indicated by position information (X₁, Y₁) in the virtual space. The structure 104, i.e., the stadium is displayed as a structure object 204 indicated by position information (X₂, Y₂). The user 110 is displayed as a user object 210 indicated by position information (X₀, Y₀). The same relative positional relationship between a structure or terrain and a user in the real space is maintained in the virtual space. The virtual space 200 of the present invention is provided by creating an object or a symbol faithfully representing the original real space. When the user moves in the real space 100, the user object displayed in the virtual space too moves such that their movements correspond to each other in distance and direction.

As shown in Fig. 3, when the user is within a given range L from the structure 102, i.e., the building in the real space 100, the content providing apparatus recognizes that the user has visited (checked in at) the structure 102. A method of recognizing the user's visit to the structure 102 is not limited to this. For example, the visit may be detected by a beacon or the like connected to a network, the beacon being installed in the structure 102.

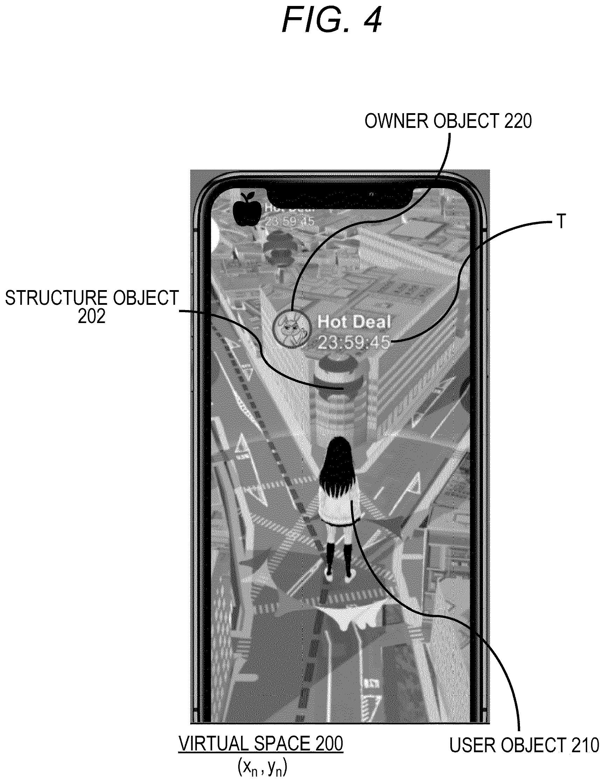

Fig. 4 depicts an example of a screen displayed on the monitor of the user terminal. The user can run the content providing system by using the user terminal. A hardware configuration of the user terminal will be described later. As shown in Fig. 4, on a display unit (display) of the user terminal, the structure object 202 and the user object 210, which are present in the virtual space 200 shown in Fig. 2, are displayed as 3D objects or 3D images. In this screen example, the owner object 220 and a remaining time T available before termination of content providing are displayed together on the structure object 220 (which will be described in detail later).

### <Hardware Configuration of Content Providing Apparatus>

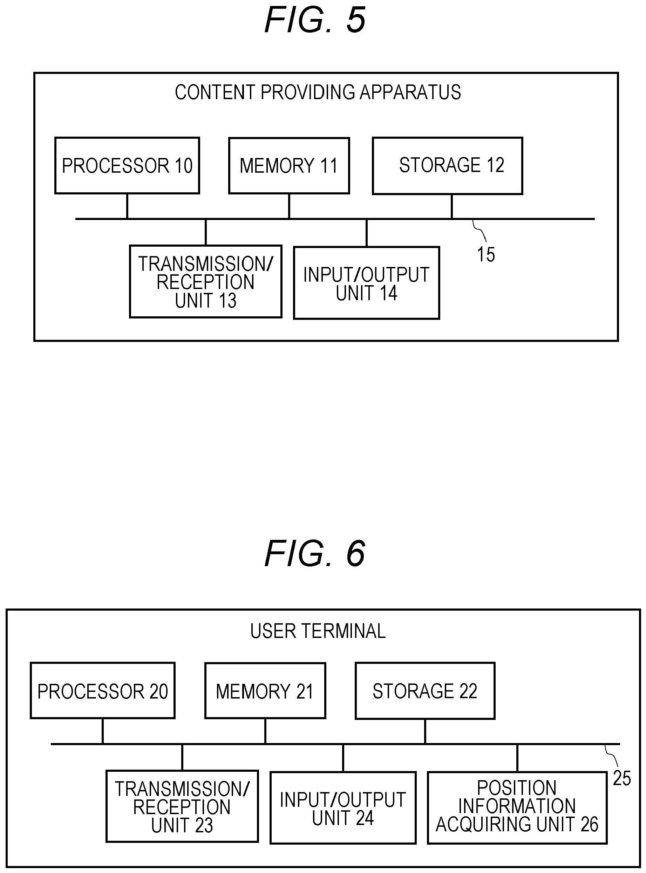

Fig. 5 depicts an example of a hardware configuration of the content providing apparatus. The hardware configuration shown in Fig. 5 is an example, and may include other constituent elements not shown in Fig. 5 or its constituent elements may be replaced with other constituent elements having similar functions. The content providing apparatus is shown in Fig. 5 as a single apparatus, but may be provided as a combination of a plurality of apparatuses that are configure into a single apparatus.

As indicated in Fig. 5, the content providing apparatus is a type of an information processing apparatus. The content providing apparatus typically includes a processor 10, a memory 11, a storage 12, a transmission/reception unit 12, an input/output unit 14, and a bus 15.

The processor 10, for example, may be provided as a central processing unit (CPU) or a micro-processing unit (MPU). The processor 10 may have a graphics processing unit (GPU), a digital signal processor (DSP), or the like. In short, the processor 10 is any device that can execute some program commands. The processor 10 may be provided with a register, an L1 cache, and an L2 cache that store information in a location physically close to the processor 10. These register and caches are included in the processor 10 in some cases, but may be included in the memory 11 or the storage 12.

The memory 11 is a temporary storage, and a random access memory (RAM) may be used as the memory 11. The memory 11 temporarily calls data from the storage 12 and stores the data.

The storage 12 is a device that records information. The storage 12 serves as either an external memory or an internal memory. The storage 12 serves as either a main storage or an auxiliary storage. The storage 12 is provided as a magnetic disk (hard disk), an optical disk, a magnetic tape, a semiconductor memory, or the like. The storage 12 may include a storage connected through a network or a cloud-based storage connected through a network. The storage 12 of the present invention may contain a content providing program according to the content providing system of one embodiment. The storage 12 can record some or the whole of data necessary for executing services pertain to the present invention. The storage 12 may include a database, which will be described later.

The above configuration describes a case where the processor 10 executes a content providing program stored in the storage 12. However, the processor 10, the storage 12, and the bus 15 may be combined into a dedicated circuit that executes pre-determined information processing as a programmable logic device (PLD) does.

The transmission/reception unit 13, working together with a communication IF, transmits information. The transmission/reception unit 13 includes a transmission unit and a reception unit. The transmission/reception unit has a function of transmitting information on the content providing apparatus to a different information terminal (a user terminal or an owner terminal) via the network. The communication IF may adopt any given connection format, such as USB, IEEE 1394, Ethernet (registered trademark), PCI, and SCSI. The network is either a wired network or wireless network, and may use an optical fiber, a coaxial cable, or the like. Connections made in the above-described system of one embodiment may be direct connections or indirect connections.

The input/output unit 14 includes an input device and an output device. The input device includes, for example, a keyboard, a mouse, a touch panel, and a pen-like pointing device. The display device has a function of displaying information. The display device is, for example, any device capable of displaying information, such as a liquid crystal display, a plasma display, or an organic EL display. The display device may be provided with an input device, such as a touch panel, that makes up a part of the display device.

Hardware making up the content providing apparatus may be a general-purpose computer or a dedicated computer. This hardware may be a workstation, a desktop PC, a laptop PC, a notebook PC, a PDA, a mobile phone, a smartphone, or the like.

With reference to Fig. 5, the content providing apparatus as a single standalone apparatus has been described. The content providing apparatus, however, may be composed of a plurality of information processing apparatuses. When the content providing apparatus is composed of a plurality of information processing apparatuses, the plurality of information processing apparatuses or one of them may be terminal devices. The plurality of information processing apparatuses may be interconnected internally or externally. When the content providing apparatus is composed of a plurality of information processing apparatuses, owners of the information processing apparatuses may be different from each other. An individual who runs the content providing apparatus may be different from the owner of the content providing apparatus. The content providing apparatus may be a virtual apparatus. For example, using cloud computing, the content providing apparatus may be provided as a virtual apparatus.

### <Hardware Configuration of User Terminal>

Fig. 6 depicts an example of a hardware configuration of the user terminal that is connected to the content providing apparatus via the network and that carries out information processing. The hardware configuration shown in Fig. 5 is an example, and may include other constituent elements not shown in Fig. 5 or its constituent elements may be replaced with other constituent elements having similar functions. The user terminal is shown in Fig. 6 as a single terminal, but may be provided as a combination of a plurality of terminals that are configure into a single device.

Among constituent elements described below, constituent elements given the same names as the names of constituent elements of the above content providing apparatus are considered to be the same constituent elements as those constituent elements of the content providing apparatus, and therefore will be omitted in further description.

As indicated in Fig. 6, the content providing apparatus is a type of an information processing apparatus. The content providing apparatus typically includes a processor 20, a memory 21, a storage 22, a transmission/reception unit 23, an input/output unit 24, a bus 25, and a position information acquiring unit 26.

The position information acquiring unit 26 acquires the current position of the user terminal by a global positioning system (GPS). A different method of acquiring position information may be adopted, by which the current position of the user terminal is acquired from an IP address or a wireless network device connected to the user terminal.

As in the above case of the content providing apparatus, hardware making up the user terminal of the present invention may be a general-purpose computer or a dedicated computer. This hardware may be a workstation, a desktop PC, a laptop PC, a notebook PC, a PDA, a mobile phone, a smartphone, or the like. However, because the user terminal carried by the user is preferable, these devices should preferably be portable devices.

### <Functional Configuration>

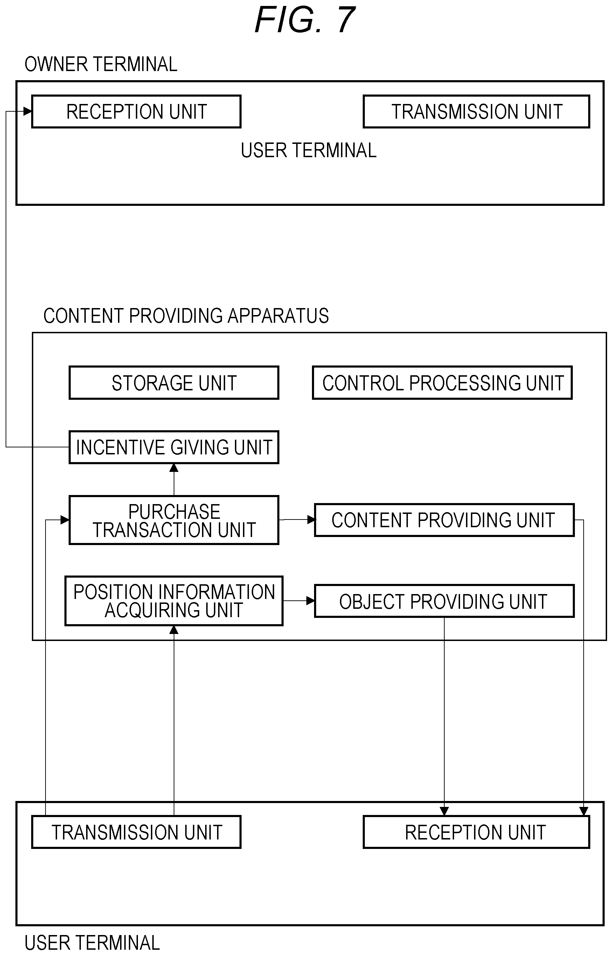

Fig. 7 is a functional block diagram of the content providing apparatus. The content providing apparatus may have only some of functional units shown in Fig. 7.

A storage unit stores virtual space generation information for generating a virtual space, based on geographical information on a real space, information for displaying a structure object corresponding to a structure present in a real space, owner information on an owner proven as an owner of the structure object, and content information associated with the owner information.

A position information acquiring unit receives position information on the user terminal, the position information being transmitted from the user terminal. The position information acquiring unit may receive position information transmitted in response to a request from the content providing apparatus or position information transmitted actively by the user terminal.

An object providing unit provides the virtual space; the structure object, and a user object such that the virtual space, the structure object, and the user object associated with position information on the user terminal in a real space are displayed on the display unit of the user terminal (see a display example in Fig. 4). The amount of information displayed simultaneously on the display unit of the user terminal may be changed properly according to a communication environment.

A purchase transaction unit carries out a purchase settlement transaction when a content purchase request has been made by the user. Making the content purchase request is allowed only when the position information on the user terminal indicates the user terminal's being within a given range from the structure (see Fig. 3).

When a purchase transaction is carried out properly, the content providing unit provides the user terminal with content provided by the owner of the structure object. In other words, only when the user visits the structure, the user is allowed to purchase the content provided by the owner of the structure object (a relationship between the owner and the content will be described later).

An incentive giving unit gives a prescribed incentive to the owner of the structure object, in accordance with the number of user terminals present within the given range from the structure as a result of the users' visiting the structure.

### <Data Structure>

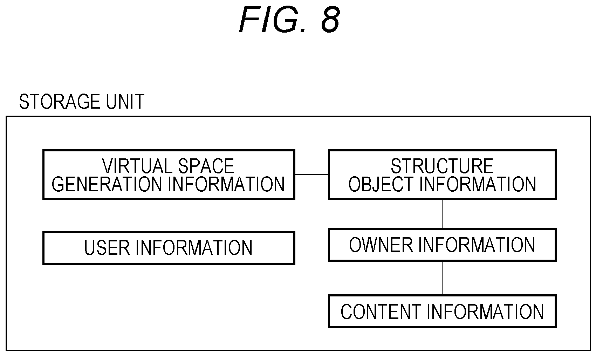

As shown in Fig. 8, the content providing apparatus includes virtual space generation information and user information. The virtual space generation information includes at least structure object information, owner information, and content information. Some of these pieces of information may be provided from an external terminal, and all pieces of information may not be always stored in the storage unit.

The virtual space generation information is information necessary for displaying the virtual space corresponding to the real space, on the user terminal. The virtual space generation information uses the structure object information, the owner information, and the content information. The virtual space generation information may be 3D map data, 3D object data, effect data, image data, text data, and the like.

The user information is information that correlates the user terminal and the owner terminal, which use the present system, with the user, respectively. The user information may typically include a user ID, a password, settlement information, unique identification information on the terminal, and contact information.

The structure object information is information necessary for displaying a structure object disposed in the virtual space. A structure object is an object of a structure present in the real space. Structures present in the real space include, for example, an expressway, a toll road, a general national road, a major local road, a general prefectural road, a railway, a metro, a railway/station building, a station, a subway, the sea, a river, a lake, an intersection, a green zone, a golf course, a park, a service area, a parking area, a tollgate, a parking lot, a station for touring, a tunnel, a bridge, an interchange, a prefectural office, a police office/police box, a fire department, a hospital, a post office, a public hall, a government office/court/embassy, etc., a castle/castle site, a mountainous region/mountain, an elementary school, a junior high school, a special school, a university, a kindergarten, a power plant, a shrine, a temple, a telephone station, a base station, a ferry port, an airport/air field, a heliport, a church, a graveyard, a factory, a lighthouse, a base, a spa, a park/garden/green tract of land, an amusement park, a tourist farm/tourist ranch, a stadium, a baseball park, a gymnasium, a racetrack, a motor sports facility, a bathing place/pool, a yacht harbor marina, a skiing ground, a golf course, a camping site, a zoo, an aquarium, a botanical garden, an art gallery/museum/library, etc., a hall/theater, a department store, a shopping center, a gas station, a hotel, a bank, a car school, a tennis court, a convenience store, and a supermarket. The real space may further include other structures not listed here.

The owner information is information on the owner who owns the structure object. The structure object is traded on a given trading platform. The content providing apparatus keeps the owner information updated.

The content information is content information associated with the owner. Examples of content include an art, a character, a domain name, a music piece, a video, a picture, a voice, a card, a land in another virtual space, and a point, which are created by the owner. These content items may be managed and held by the owner, or may be content items that are proven as content items created by the owner but are managed or held by a different user.

### <Process Flow>

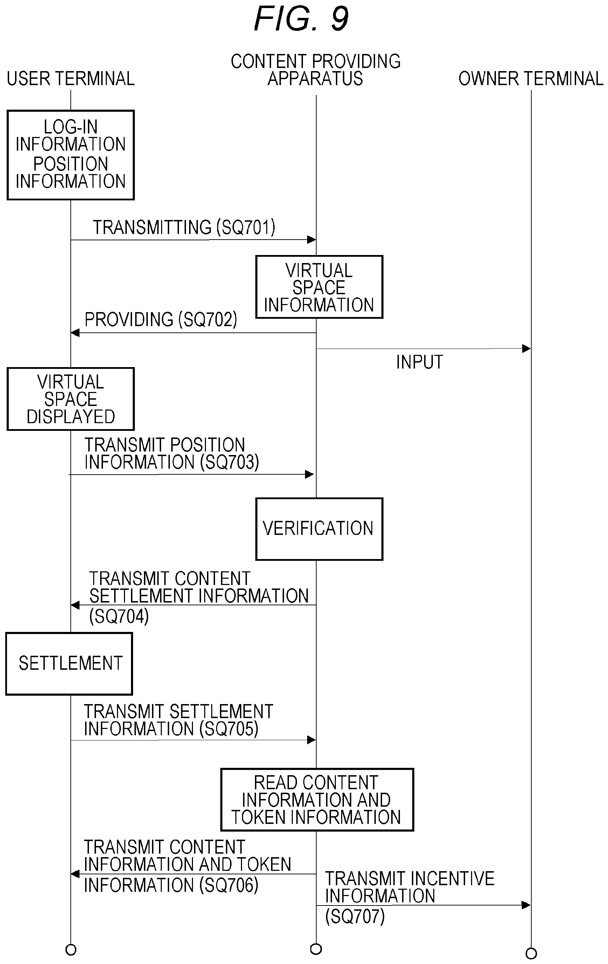

Fig. 9 depicts a flow of a process carried out by the present system. As shown in Fig. 9, the user transmits login information, using the user terminal (SQ701), and logs in to a service of the present system, the service being provided by the content providing apparatus. At this time, position information on the user terminal may be transmitted, too. The content providing apparatus provides at least virtual space information about an area in which the user terminal is present (SQ702). A virtual space is thus displayed on the user terminal.

When the user visits a structure object owned by a certain owner (which means when the user transmits position information near the structure corresponding to the structure object) (SQ703), the content providing apparatus verifies whether the position information transmitted from the user terminal indicates the user terminal's being present near the structure. For example, the content providing apparatus checks whether the position information transmitted from the user terminal indicates the user terminal's being present within the range L shown in Fig. 3, using a database.

The content providing apparatus then transmits content settlement information necessary for purchasing content belong to the owner who owns the structure object (SQ704). In the case of purchasing the content, the user terminal carries out a settlement transaction. When the settlement transaction is carried out correctly, settlement information is transmitted (SQ705). The content providing apparatus reads content information on the purchased content and token information corresponding to the content information, and transmits the token information to the user terminal (SQ706). The settlement transaction is carried out by the user terminal or the content providing apparatus, or may be carried out by an external settlement agency. Now the user is allowed to use the content, and is able to obtain a given token corresponding to the content.

The content may be rendered available to the user by a process of transferring the ownership of the content from the owner to the user. In such a case, transfer of the ownership may be proved through collaboration with a different service by which the ownership of the content can be confirmed.

When the settlement transaction is completed, information notifying of the content being purchased may be transmitted to the owner's terminal. At this time, a prescribed incentive may be given to the owner (SQ707).

### <Other Embodiments>

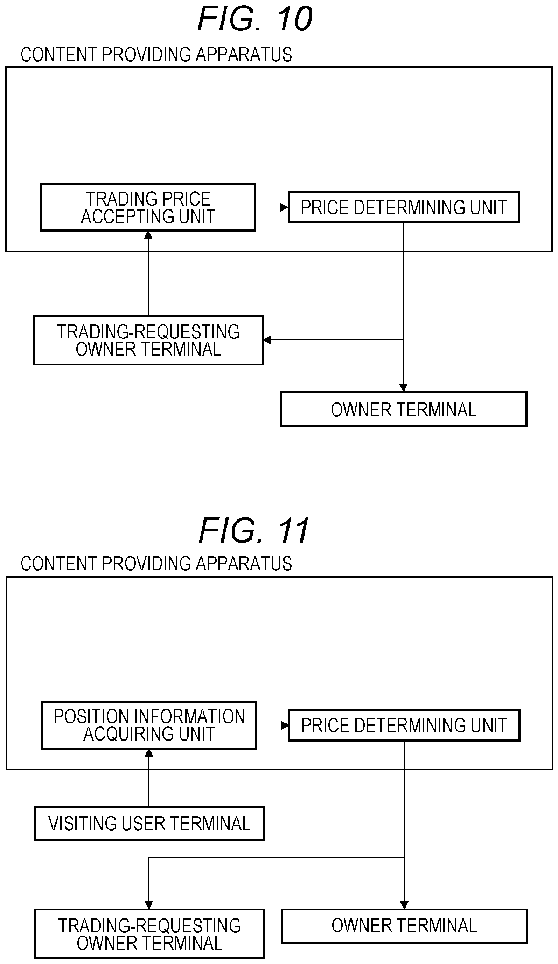

Figs. 10 to 14 depict configuration examples of other embodiments implemented by adding constituent elements to the above embodiment of the present invention or replacing constituent elements of the above embodiment. The content providing apparatus shown in each of Figs. 10 to 14 includes the same constituent elements as those of the above content providing apparatus, and the same constituent elements are not illustrated and are omitted in further description.

As shown in Fig. 10, the content providing apparatus includes a trading price accepting unit and a price determining unit. Rights related to the owner of the structure object can be traded. As shown in Fig. 10, an owner terminal of a trading-requesting owner who is looking for a trading deal sends a trading request to the content providing apparatus. At this time, the trading-requesting owner presents a price at which the owner desires to strike a deal (purchase requesting price). The presented price is accepted by the trading price accepting unit. The price determining unit determines a price according to the accepted price (price request). The determined price is sent to the trading-requesting owner's terminal and the current owner's terminal. In this manner, the owner is able to sell a structure object he or she owns, thus gaining a profit through the selling.

According to the configuration example shown in Fig. 10, the price (value) of the structure object is determined by the request made by the trading-requesting owner's terminal. As indicated by a configuration example shown in Fig. 11, however, the price (value) of a structure object may be determined according to performance achieved by the structure object. As indicated in Fig. 11, the content providing apparatus determines the price according to the number of users having visited each structure (the number of user terminals having transmitted position information near the structure). Specifically, the position information acquiring unit acquires position information from the user terminals of users who have visited the structure, and the price determining unit determines the price according to the number of users having visited the structure. The determined price information is sent to the trading-requesting owner terminal and the current owner terminal.

According to such a configuration, each owner advertises the structure corresponding to the structure object owned by the owner in an effort to increase the number of users who visit the structure, thereby increasing the value of the structure object. In addition, as described above, unique content, which the owner offers to users who visit the structure, may be put on sale. In other words, the owner, according to this embodiment, is able to make profits by selling unique content that users cannot purchase unless they visit the structure. The owner is able to make profits also by selling the structure object with an increased value at a price higher than the original purchase price. The number of users who visit each structure can be increased by advertisements by the owner or sales of unique content that cannot be purchased without visiting the structure.

The price is determined by calculating the number of users who have visited the structure within a prescribed period. However, the price may be determined by, for example, calculating the number of users who have visited the structure within a specific period or the number or price of products or services purchased by the user at the structure.

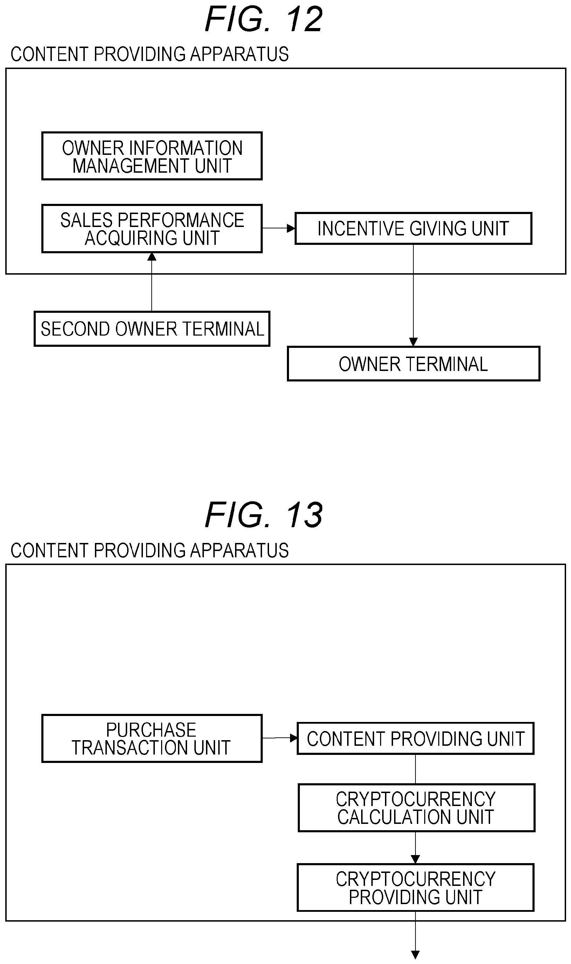

In the above example, the structure object is owned by the owner, and its value is increased by advertisements or the like made by the owner. However, for example, the right of use may be lent to a more influential owner (second owner). The second owner, who acts as an influencer to let people know attractive features of the structure, may advertise the structure and receive a given share of revenue (not shown). This allows a user who is not good at advertisement to make profits by using the structure object. To visiting users, unique content provided by the second owner (second owner content) may be sold. As shown in Fig. 12, the content providing apparatus includes a sales performance acquiring unit that acquires sales performance based on advertisement by the second owner and sales of second owner content, and an incentive giving unit that gives a reward calculated according to sales performance, to the owner's terminal, the reward being given as an incentive. An owner information management unit of the content providing apparatus manages and updates information on the owner and the second owner.

As shown in Fig. 13, the content providing apparatus includes a cryptocurrency calculation unit and a cryptocurrency providing unit. When the user's terminal makes a content purchase request to the content providing apparatus, the cryptocurrency calculation unit calculates the amount of cryptocurrency corresponding to the content. The cryptocurrency providing unit provides the user terminal with the calculated amount of cryptocurrency to allow the user terminal to use the cryptocurrency. The cryptocurrency may be a digital asset designed to function as an exchange medium. A record of cryptocurrency ownership is made open to the public through a distributed ledger technology. The cryptocurrency provided may be, for example, bitcoin or alto coin, or may be staple coin whose value is fixed to the value of a real currency. The cryptocurrency may be a token that is issued using an existing blockchain network. The cryptocurrency may be of a currency type or an asset type, providing that each type bears an economic value. These approaches create a new economic zone using the cryptocurrency. The amount of the cryptocurrency provided may be regulated according to the order or quantity of content purchase. This approach builds a structure in which an advantage of being the first to make a purchase is sought for.

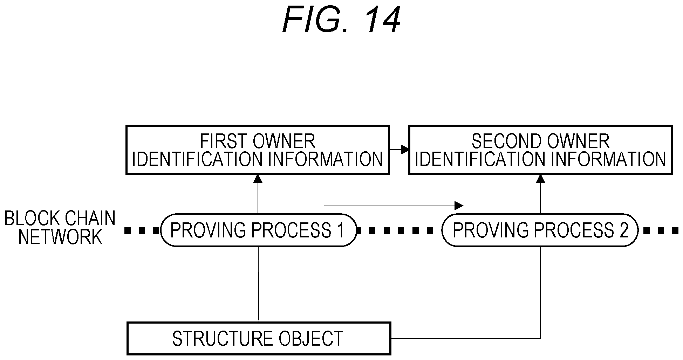

As indicated in Fig. 14, the structure object according to this embodiment may be the object whose owner is authenticated by a non-fungible token (NFT). This makes it possible to employ a platform operator providing existing NFT trading services as a coordinator or mediator who coordinates or mediate trading transactions. As shown in Fig. 14, the ownership of the structure object is made clear by proving a combination of the structure object and first owner identification information (wallet information on the first owner) on the blockchain network (proving process 1). In a case where the first owner sells the structure object to the second owner, the ownership of the structure object being transferred from the first owner identification information to the second owner identification information (wallet information on the second owner) is proven, which serves as a proof a change in the ownership (proving process 2).

### (Industrial Applicability)

The virtual space of the system according to the present invention is generated based on the real space. The system, however, may be run in a space purely generated as a virtual space (an imaginary space having nothing to do with the real space). In this case, a user's visiting to the structure is verified based on position information in the virtual space.

The embodiments have been described above exemplary for facilitating understanding of the present invention, and are not intended for a limited interpretation of the present invention. The present invention may be modified/improved without departing from the substance of the invention. Obviously, the present invention includes any equivalent of the invention.

It is obvious that techniques described exemplary in the embodiments disclosed herein are not limited in application but may be applied to various examples within the scope of the technical concept of the invention. For example, according to the embodiments disclosed herein, the system of each embodiment may be configured such that information displayed on the monitor of the information processing apparatus is transmitted to a different information processing apparatus so that the information is put on its monitor.

Processes and procedures described herein may be not limited to those explicitly described in the embodiments but include also processes and procedures implemented by software and hardware or a combination thereof. In addition, the processing and procedures described herein may be implemented in the form of computer programs and be executed by various computers. Such computer programs may be stored in a storage medium. The programs may be stored in a storage medium of a non-transitory or temporary storage type.

Configurations included in the present invention are as follows.

### (Configuration 1)

A content providing apparatus including:
a storage unit storing a virtual space generated based on geographical information of a real space, a structure object corresponding to a structure present in the real space, owner information on an owner proven as an owner of the structure object, and content information associated with the owner information;
an object providing unit that provides the virtual space, the structure object, and a user object such that the virtual space, the structure object, and the user object associated with position information on a user terminal in the real space are displayed on a display unit of the user terminal;
a content providing unit that when the position information on the user terminal indicates the user terminal's being present within a given range from the structure in the real space and a request for the content is made from the user terminal, provides the content in such a way as to allow the user terminal to use the content; and
an incentive giving unit that in accordance with the number of user terminals present within the given range from the structure as a result of the users' visiting the structure, gives a prescribed incentive to an owner of the structure object corresponding to the structure.

### (Configuration 2)

The content providing apparatus according to configuration 1,
wherein rights for the structure object, the rights being related to the owner, are traded on a given trading platform, and
wherein the content providing apparatus further includes a structure object price determining unit that determines a trading price of the structure object, based on a price request by an owner who wishes to trade the structure object.

### (Configuration 3)

The content providing apparatus according to configuration 1,
wherein rights for the structure object, the rights being related to the owner, are traded on a given trading platform, and
wherein the content providing apparatus further includes a structure object price determining unit that determines a trading price of the structure object, based on at least the number of users having visited the structure.

### (Configuration 4)

The content providing apparatus according to configuration 1,
wherein rights for the structure object, the rights being related to the owner, include information on a second owner to which the owner has lent the rights, and
wherein the content providing apparatus further includes a share giving unit that gives a share of an economic profit that the second owner has gained over the structure object, to the owner.

### (Configuration 5)

The content providing apparatus according to configuration 1, further including
a cryptocurrency providing unit that when the content providing apparatus receives the request for the content from the user terminal, provides a cryptocurrency according to the content in such a way as to allow the user terminal to use the cryptocurrency.

### (Configuration 6)

The content providing apparatus according to configuration 5,
wherein the cryptocurrency is a token that is issued using a given distributed ledger technology.

### (Configuration 7)

The content providing apparatus according to configuration 1,
wherein the owner of the structure object is authenticated by a non-fungible token, and
wherein when the authenticated owner is changed, the storage unit updates information by associating the owner information and the content information with changed information on the owner.

### (Configuration 8)

The content providing apparatus according to item 1,
wherein the content is information of which the owner is authenticated by a non-fungible token.

### (Configuration 9)

A content providing method including the steps of:
acquiring a virtual space generated based on geographical information of a real space, a structure object corresponding to a structure present in the real space, owner information on an owner proved as an owner of the structure object, and content information associated with the owner information, from a content providing apparatus;
displaying the virtual space, the structure object, and a user object on a display unit of a user terminal, the virtual space, the structure object, and the user object being associated with position information on the user terminal in the real space;
when the position information on the user terminal indicates the user terminal's being present within a given range from the structure and a request for the content is made from the user terminal, allowing the user terminal to use the content;
and in accordance with the number of user terminals present within the given range from the structure as a result of the users' visiting the structure, giving a prescribed incentive to an owner of the structure object corresponding to the structure.

### (Configuration 10)

A content providing program that causes a computer to function as:
a storage unit storing a virtual space generated based on geographical information of a real space, a structure object corresponding to a structure present in the real space, owner information on an owner proven as an owner of the structure object, and content information associated with the owner information;
an object providing unit that provides the virtual space, the structure object, and a user object such that the virtual space, the structure object, and the user object associated with position information on a user terminal in the real space are displayed on a display unit of the user terminal;
a content providing unit that when the position information on the user terminal indicates the user terminal's being present within a given range from the structure and a request for the content is made from the user terminal, provides the content in such a way as to allow the user terminal to use the content; and
an incentive giving unit that in accordance with the number of user terminals present within the given range from the structure as a result of the users' visiting the structure, gives a prescribed incentive to an owner of the structure object corresponding to the structure.

### (Configuration 11)

A recording medium recording a computer-readable content providing program that causes a computer to function as:
a storage unit storing a virtual space generated based on geographical information of a real space, a structure object corresponding to a structure present in the real space, owner information on an owner proven as an owner of the structure object, and content information associated with the owner information;
an object providing unit that provides the virtual space, the structure object, and a user object such that the virtual space, the structure object, and the user object associated with position information on a user terminal in the real space are displayed on a display unit of the user terminal;
a content providing unit that when the position information on the user terminal indicates the user terminal's being present within a given range from the structure and a request for the content is made from the user terminal, provides the content in such a way as to allow the user terminal to use the content; and
an incentive giving unit that in accordance with the number of user terminals present within the given range from the structure as a result of the users' visiting the structure, gives a prescribed incentive to an owner of the structure object corresponding to the structure

### (Configuration 12)

A content providing system including a content providing apparatus and a user terminal,
wherein the content providing apparatus includes:
a storage unit storing a virtual space generated based on geographical information of a real space, a structure object corresponding to a structure present in the real space, owner information on an owner proven as an owner of the structure object, and content information associated with the owner information; and
an object providing unit that provides the virtual space, the structure object, and a user object such that the virtual space, the structure object, and the user object associated with position information on a user terminal in the real space are displayed on a display unit of the user terminal,
wherein when the user terminal present within a given range from the structure in the real space transmits position information and a request for the content, to the content providing apparatus, the content providing apparatus provides the content requested by the transmitted request in such a way as to allow the user terminal to use the content, and
wherein in accordance with the number of user terminals present within the given range from the structure as a result of the users' visiting the structure, the content providing apparatus gives a prescribed incentive to an owner of the structure object corresponding to the structure.

### Reference Signs List

- 100: real space
- 102, 104: structure
- 106: road
- 110: user
- 200: virtual space
- 202, 204: structure object
- 206: road object

## Claims

1. A content providing apparatus comprising:
a storage unit storing a virtual space generated based on geographical information of a real space, a structure object corresponding to a structure present in the real space, owner information on an owner proven as an owner of the structure object, and content information associated with the owner information;
an object providing unit that provides the virtual space, the structure object, and a user object such that the virtual space, the structure object, and the user object associated with position information on a user terminal in the real space are displayed on a display unit of the user terminal;
a content providing unit that when the position information on the user terminal indicates the user terminal's being present within a given range from the structure in the real space and a request for the content is made from the user terminal, provides the content in such a way as to allow the user terminal to use the content; and
an incentive giving unit that in accordance with the number of user terminals present within the given range from the structure as a result of the users' visiting the structure, gives a prescribed incentive to an owner of the structure object corresponding to the structure.

2. The content providing apparatus according to claim 1,
wherein rights for the structure object, the rights being related to the owner, are traded on a given trading platform, and
wherein the content providing apparatus further includes a structure object price determining unit that determines a trading price of the structure object, based on a price request by an owner who wishes to trade the structure object.

3. The content providing apparatus according to claim 1,
wherein rights for the structure object, the rights being related to the owner, are traded on a given trading platform, and
wherein the content providing apparatus further includes a structure object price determining unit that determines a trading price of the structure object, based on at least a number of users having visited the structure.

4. The content providing apparatus according to claim 1,
wherein rights for the structure object, the rights being related to the owner, include information on a second owner to which the owner has lent the rights, and
wherein the content providing apparatus further includes a share giving unit that gives a share of an economic profit that the second owner has gained over the structure object, to the owner.

5. The content providing apparatus according to claim 1, further comprising
a cryptocurrency providing unit that when the content providing apparatus receives the request for the content from the user terminal, provides a cryptocurrency according to the content in such a way as to allow the user terminal to use the cryptocurrency.

6. The content providing apparatus according to claim 5,
wherein the cryptocurrency is a token that is issued using a given distributed ledger technology.

7. The content providing apparatus according to claim 1,
wherein the owner of the structure object is authenticated by a non-fungible token, and
wherein when the authenticated owner is changed, the storage unit updates information by associating the owner information and the content information with changed information on the owner.

8. The content providing apparatus according to claim 1,
wherein the content is information of which the owner is authenticated by a non-fungible token.

9. A content providing method comprising the steps of:
acquiring a virtual space generated based on geographical information of a real space, a structure object corresponding to a structure present in the real space, owner information on an owner proved as an owner of the structure object, and content information associated with the owner information, from a content providing apparatus;
displaying the virtual space, the structure object, and a user object on a display unit of a user terminal, the virtual space, the structure object, and the user object being associated with position information on the user terminal in the real space;
when the position information on the user terminal indicates the user terminal's being present within a given range from the structure and a request for the content is made from the user terminal, allowing the user terminal to use the content; and
in accordance with the number of user terminals present within the given range from the structure as a result of the users' visiting the structure, giving a prescribed incentive to an owner of the structure object corresponding to the structure.

10. A content providing program that causes a computer to function as:
a storage unit storing a virtual space generated based on geographical information of a real space, a structure object corresponding to a structure present in the real space, owner information on an owner proven as an owner of the structure object, and content information associated with the owner information;
an object providing unit that provides the virtual space, the structure object, and a user object such that the virtual space, the structure object, and the user object associated with position information on a user terminal in the real space are displayed on a display unit of the user terminal;
a content providing unit that when the position information on the user terminal indicates the user terminal's being present within a given range from the structure and a request for the content is made from the user terminal, provides the content in such a way as to allow the user terminal to use the content; and
an incentive giving unit that in accordance with the number of user terminals present within the given range from the structure as a result of the users' visiting the structure, gives a prescribed incentive to an owner of the structure object corresponding to the structure.

11. A content providing system including a content providing apparatus and a user terminal,
wherein the content providing apparatus includes:
a storage unit storing a virtual space generated based on geographical information of a real space, a structure object corresponding to a structure present in the real space, owner information on an owner proven as an owner of the structure object, and content information associated with the owner information; and
an object providing unit that provides the virtual space, the structure object, and a user object such that the virtual space, the structure object, and the user object associated with position information on a user terminal in the real space are displayed on a display unit of the user terminal,
wherein when the user terminal present within a given range from the structure in the real space transmits position information and a request for the content, to the content providing apparatus, the content providing apparatus provides the content requested by the transmitted request in such a way as to allow the user terminal to use the content, and
wherein in accordance with the number of user terminals present within the given range from the structure as a result of the users' visiting the structure, the content providing apparatus gives a prescribed incentive to an owner of the structure object corresponding to the structure.
